# EUROPEAN PATENT SPECIFICATION

(11) **EP 4 371 645 B1**
(45) Date of publication and mention of the grant of the patent: **02.12.2026**
(21) Application number: 23202829.0
(22) Date of filing: 10.10.2023
(51) Int. Cl.: B01D 45/16, B04C 3/04

(54) **INERTIAL SEPARATOR AND METHOD OF USE**
TRÄGHEITSABSCHEIDER UND VERFAHREN ZUR VERWENDUNG
SÉPARATEUR INERTIEL ET SON PROCÉDÉ D'UTILISATION

(30) Priority: 21.11.2022 US 202217990986
(43) Date of publication of application: 22.05.2024
(73) Proprietor: Pall Corporation, Port Washington, NY 11050 (US)
(72) Inventor: FERNANDES, Luiz Claudio Vieira, Port Washington, 11050 (US); LIU, Jianxiao, Port Washington, 11050 (US)
(74) Representative: J A Kemp LLP

(56) References cited:
- EP-A2- 0 344 749
- IL-A- 90 502
- US-A- 4 746 340
- US-A1- 2013 031 878
- US-A1- 2020 353 394
- US-B2- 11 311 890

## Description

### BACKGROUND OF THE INVENTION

Engines, whether gas turbine, gasoline, diesel, or hybrid, require a flow of air into the engine during operation. Some engines, particularly in aircraft, military, or industrial gas turbine vehicles, require an extremely high flow of air into the engine due to the high power produced. Since particulates in the air can damage these engines, inertial separators (for example, vortex air cleaners, inlet particle separators (IPS), and engine air particle separators (EAPS)) are sometimes used with engines operating under conditions where the air may contain high volumes of particulates are removed prior to entering the engine inlets. Inertial separators are particularly useful for use with aircraft, especially turbine driven types (e.g., helicopters), as, when operating close to the ground, they stir up great amounts of dirt and dust.

US 4746340, US 11311890, IL 90502, US 2013/031878, EP 0344749, and US 2020/353394 describe prior art air cleaners.

A single inertial separator or a plurality of inertial separators can be used with an engine, typically, each separator comprises an inlet tube having a central passage with an inlet and an outlet at opposite ends, a deflector for creating a vortex stream in the influent air to concentrate contaminant particles in the air at the periphery of the passage and clean the air at the center of the passage, and an outlet tube having a central clean air passage communicating with the central passage of the inlet tube. The relatively clean air at the center of the passage flows through the central clean air passage of the outlet tube. Typically, the exterior wall of the outlet tube defines a generally annular contaminant scavenge passage within the central passage of the inlet tube, through which pass contaminant particles while relatively clean air at the center of the passage flows through the central clean air passage of the outlet tube

However, there is a need for improved inertial separators.

The present invention provides for ameliorating at least some of the disadvantages of the prior art. These and other advantages of the present invention will be apparent from the description as set forth below.

### BRIEF SUMMARY OF THE INVENTION

An aspect of the invention provides an inertial separator comprising (a) an inlet tube having an inlet at an inlet end, an outlet at an opposite outlet end, an undercut, and a central passage between the inlet end and the outlet end, the outlet end including the undercut; (b) a deflector mounted in the central passage, the deflector having a plurality of spaced centrally joined helical vanes abutting the wall of the central passage; (c) a coaxially arranged outlet tube positioned within the outlet end of the inlet tube, the outlet tube having a first end and an opposite second end, the first end having an inlet, the second end having an outlet, and an outlet tube central passage between the inlet and the outlet in fluid communication with the central passage of the inlet tube, the inlet of the outlet tube being of lesser diameter than the central passage of the inlet tube, the outlet tube having a spiral ramp having a first ramp end and a second ramp end, the spiral ramp having a portion angled downwardly toward the second ramp end and the undercut; and, (d) a scavenge flow outlet adjacent the undercut and the second ramp end.

In some aspects of an inertial separator, the outlet tube includes pairs of separated tabs that prevent rotation of outlet tubes during use.

In an aspect, an inertial separator device is provided, comprising a housing including an inertial separator according to an aspect of the invention.

In another aspect, an inertial separator array is provided, comprising a housing including two or more inertial separators according to an aspect of the invention.

In another aspect, a method for processing air flow into an operating engine comprises passing air into an inlet of an outlet tube of inertial separator according to an aspect of the invention, passing scavenge-depleted air from the outlet of the outlet tube into the operating engine, and passing scavenge flow from the inertial separator through the scavenge flow outlet.

### BRIEF DESCRIPTION OF THE SEVERAL VIEWS OF THE DRAWING(S)

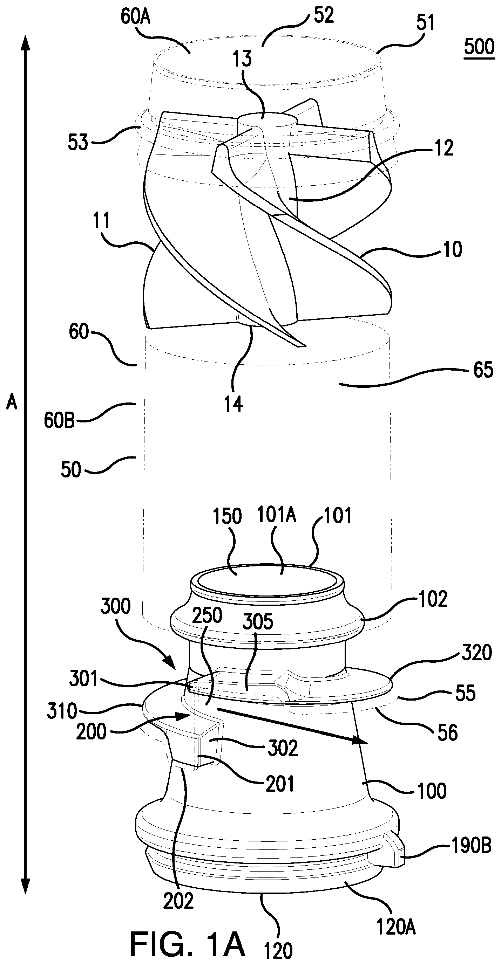

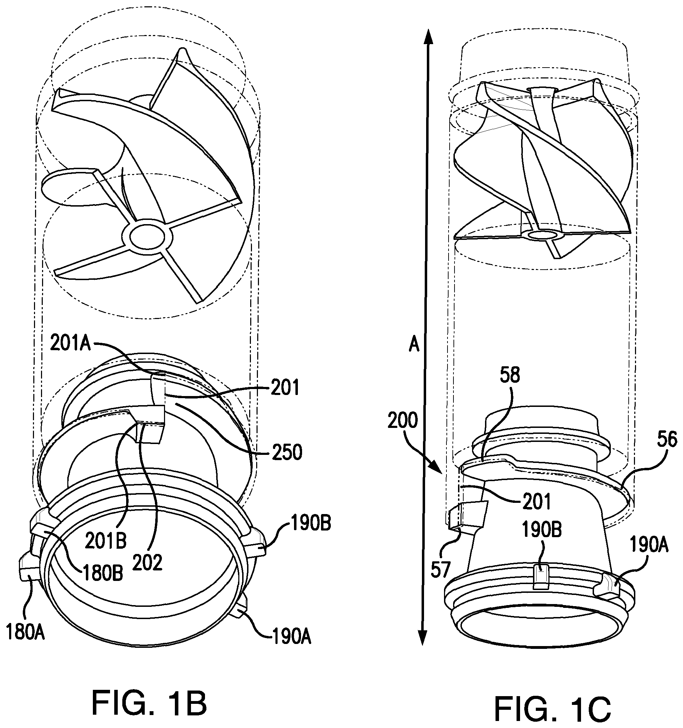

Figure 1A is a drawing showing a side view of an inertial separator comprising an inlet tube, an undercut, a deflector (sometimes referred to as a "swirler" or a "spinner"), an outlet tube with an anti-rotation tab, a spiral ramp, a scavenge flow outlet, and scavenge flow according to an aspect of the invention; Figure 1B is an angled bottom view of the inertial separator shown in Figure 1A, also showing pairs of spaced apart anti-rotation tabs; Figure 1C is a drawing showing a side view of the inertial separator as shown in Figure 1A.

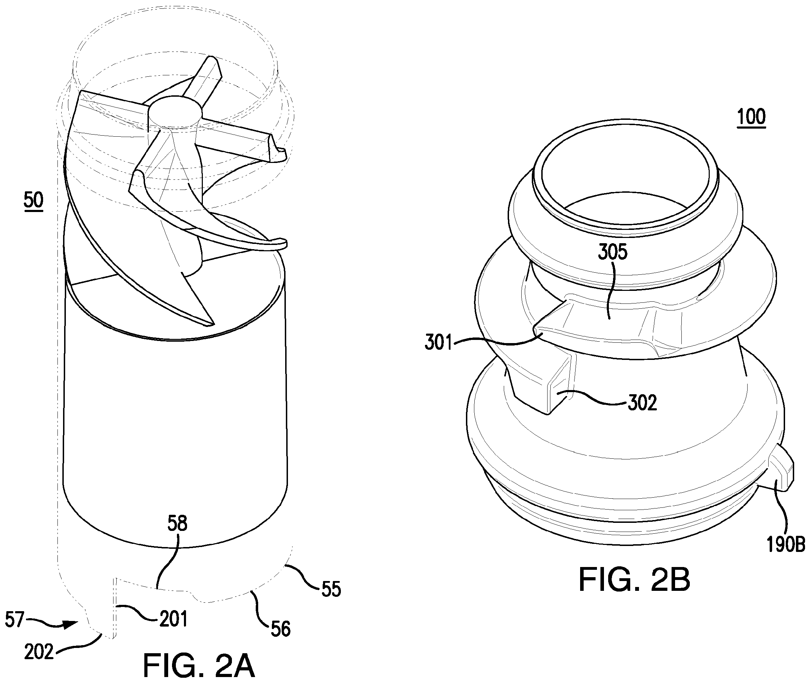

Figure 2A is a drawing showing a top view of the inlet tube shown in Figure 1A, and Figure 2B is a drawing showing a top view of the outlet tube shown in Figure 1A.

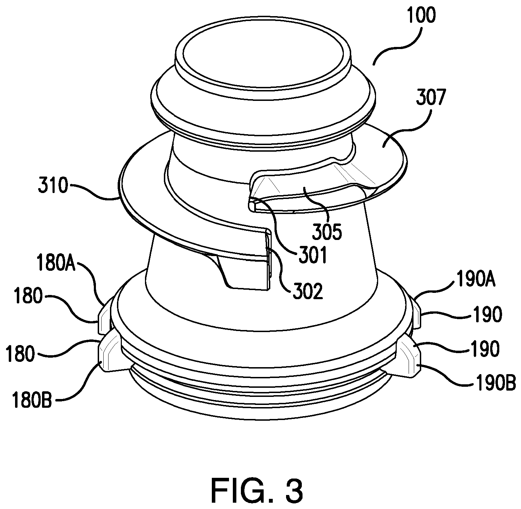

Figure 3 is a drawings showing an angled side view of the outlet tube shown in Figure 1A, showing pairs of spaced apart anti-rotation tabs arranged to contact spaced apart anti-rotation tabs on adjacent inertial separators.

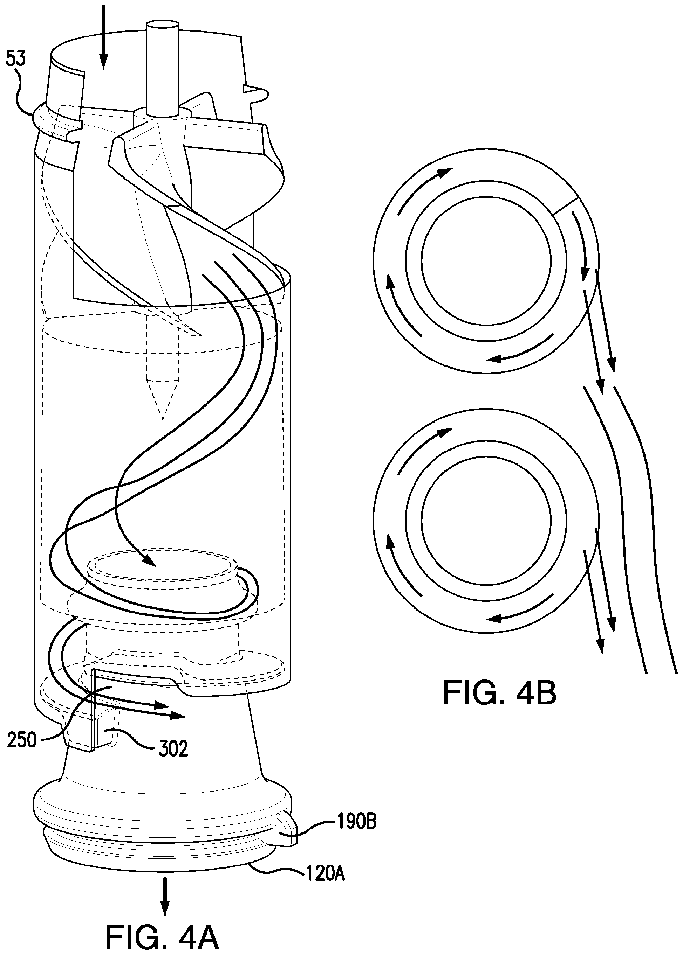

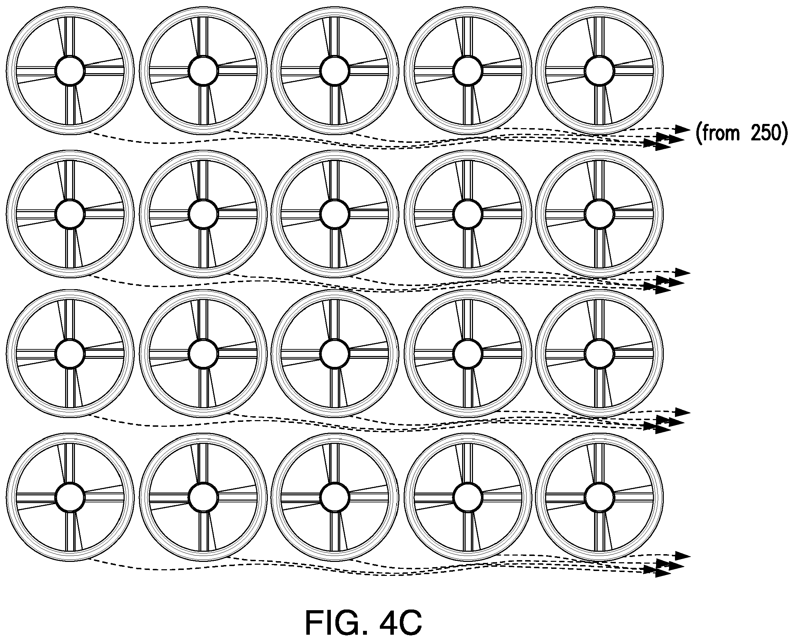

Figure 4A is a drawing showing, diagrammatically, air and scavenge flow through an inertial separator according to an aspect of the invention; Figures 4B and 4C are top view drawings showing, diagrammatically, aligned scavenge flow through a plurality of inertial separators and scavenge flow outlets according to an aspect of the invention. Figure 4B also shows particles constantly moving in the same direction at high velocities.

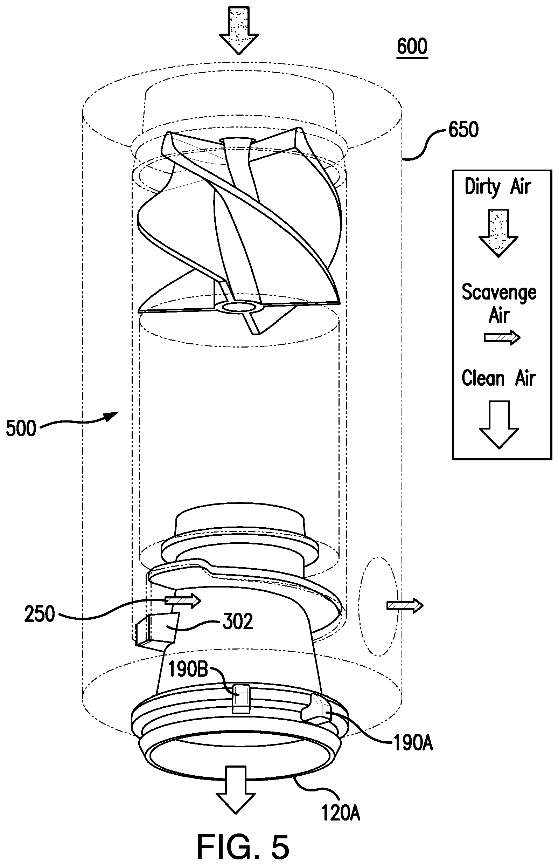

Figure 5 is a drawing showing an inertial separator device according to an aspect of the invention, the device comprising a housing including an inertial separator as shown in Figure 1A according to an aspect of the invention, also showing air and scavenge flow through the inertial separator device.

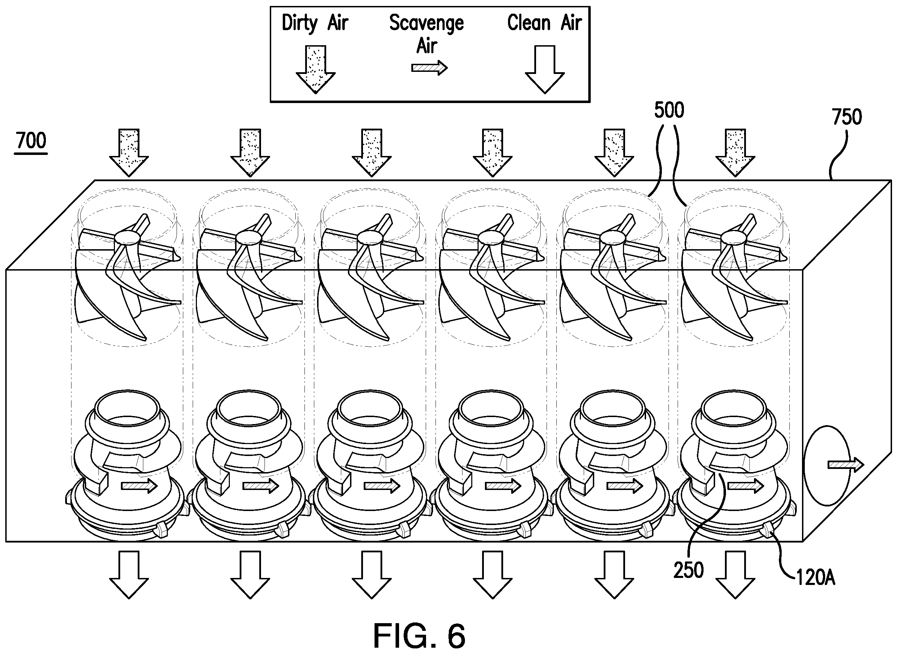

Figure 6 is a drawing showing an inertial separator array according to an aspect of the invention, the array comprising a housing including a plurality of inertial separators as shown in Figure 1A according to an aspect of the invention, also showing air and scavenge flow through the inertial separator array. The scavenge flow progressively increases its flow towards the scavenge exit of the system with the individual contribution of each inertial separator.

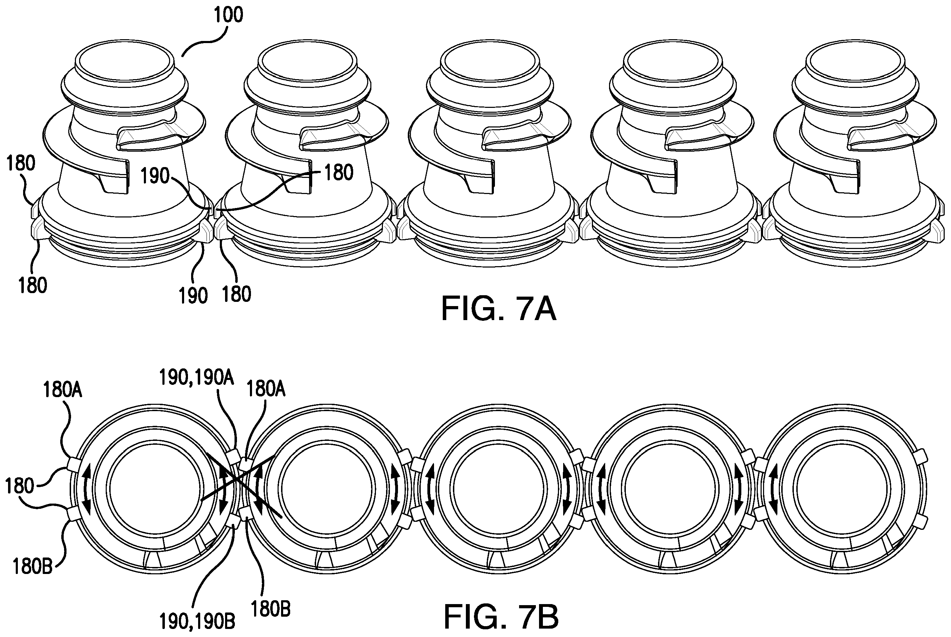

Figure 7A is a drawing showing side views of a plurality of outlet tubes arranged for use in an inertial separator array wherein the outlet tubes include pairs of spaced apart anti-rotation tabs as shown in Figures 1B and 3; Figure 7B is a drawing showing top views of the plurality of outlet tubes shown in Figure 7A, wherein pairs of spaced apart anti-rotation tabs on adjacent outlet tubes prevent further rotation of the tubes (and inertial separators) during use.

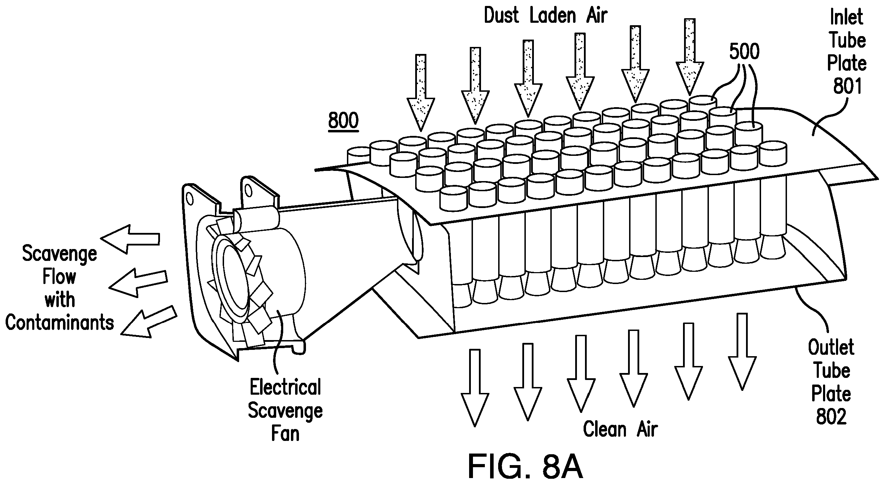

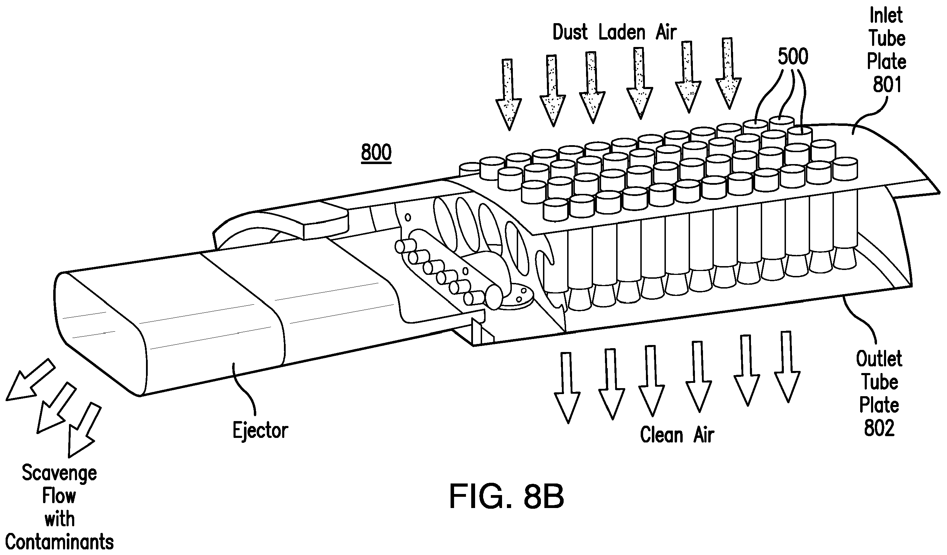

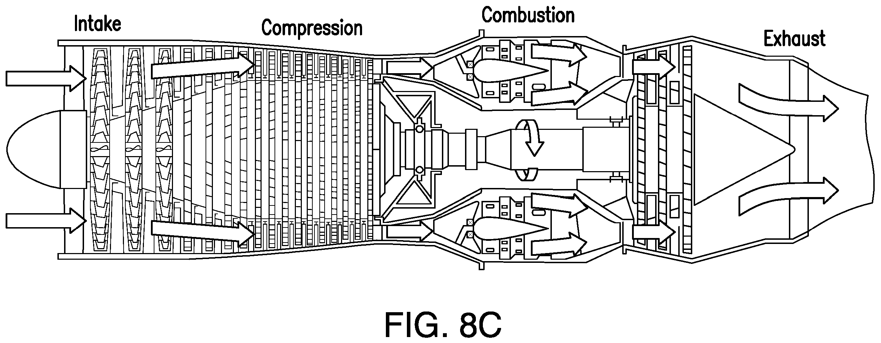

Figure 8A is a drawing showing an inertial separator array according to an aspect of the invention in communication with a fan, Figure 8B is a drawing showing an inertial separator array according to an aspect of the invention in communication with an air ejector, wherein the inertial separator arrays shown in Figures 8A and 8B can be used with a gas turbine engine, and Figure 8C is a drawing showing an illustrative turbine engine.

### DETAILED DESCRIPTION OF THE INVENTION

In accordance with an aspect of the invention, an inertial separator is provided comprising (a) an inlet tube having an inlet at an inlet end, an outlet at an opposite outlet end, an undercut, and a central passage between the inlet end and the outlet end; the outlet end including the undercut; (b) a deflector mounted in the central passage, the deflector having a plurality of spaced centrally joined helical vanes abutting the wall of the central passage; (c) a coaxially arranged outlet tube positioned within the outlet end of the inlet tube, the outlet tube having a first end and an opposite second end, the first end having an inlet, the second end having an outlet, and an outlet tube central passage between the inlet and the outlet in fluid communication with the central passage of the inlet tube, the inlet of the outlet tube being of lesser diameter than the central passage of the inlet tube, the outlet tube having a spiral ramp having a first ramp end and a second ramp end, the spiral ramp having a portion angled downwardly toward the second ramp end and the undercut; and, (d) a scavenge flow outlet adjacent the undercut and the second ramp end.

In one aspect of the inertial separator, the spiral ramp comprises a helicoidal ramp.

In some aspects of an inertial separator, the outlet tube includes an anti-rotation element comprising pairs of separated anti-rotation tabs that prevent rotation of the outlet tube during use.

In another aspect, an inertial separator array is provided, comprising a housing including two or more inertial separators according to an aspect of the invention.

In another aspect, a method for processing air flow into an operating engine comprises passing air into an inlet of an outlet tube of inertial separator according to an aspect of the invention, passing scavenge-depleted air from the outlet of the outlet tube into the operating engine, and passing scavenge flow from the inertial separator through the scavenge flow outlet.

Aspects of the method for processing air flow into an operating engine can include passing air into an inlet of an outlet tube of an inertial separator device or into two or more inlet tubes of an inertial separator array according to an aspect of the invention, passing scavenge-depleted air from the outlet(s) of the outlet tube(s) into the operating engine, and passing scavenge flow from the inertial separator(s) through the scavenge flow outlet(s).

In a typical aspect of the method, the scavenge flow includes dust particles (e.g., dirt).

Aspects of the method for processing air flow into an operating engine can also include preventing and/or minimizing rotation of the inertial separator(s) during use. In one aspect of the method, a pair of anti-rotation tabs of one inertial separator contact a pair of anti-rotation tabs of an adjacent inertial separator, preventing further rotation of the inertial separators. In an aspect of the method, two or more inertial separators each comprise an outlet tube including first and second pairs of first and second anti-rotation tabs, wherein first and second anti-rotation tabs of the first pair of anti-rotation tabs are spaced further apart than first and second anti-rotation tabs of the second pair of anti-rotation tabs, and one pair of first and second anti-rotation tabs of one inertial separator contact one pair of first and second anti-rotation tabs of an adjacent inertial separator, preventing further rotation of the adjacent inertial separators.

Advantageously, inertial separators according to aspects of the invention allow air flow therethrough with reduced interference, requiring less scavenge flow. The circular flow inside the central portion of the separator is reinforced by the scavenge lower pressure and rotational movement. Moreover, scavenge flow from a plurality of separators can be aligned to more efficiently carry the scavenge flow (e.g., including dust) in the same direction at high velocities away from the separators, which can also reduce the possibility of backflow.

Another advantage is that scavenge flow is directional and defined, rather than being released in all directions.

Each of the components of the invention will now be described in more detail below, wherein like components have like reference numbers.

Using the aspect illustrated in Figures 1A and 1B for reference, an inertial separator 500 comprises an inlet tube 50 having an inlet 51 at an inlet end 52, an outlet 55 at an opposite outlet end 56, an undercut 200, a wall 60 having an inner wall surface 60A and an outer wall surface 60B, and a central passage 65 between the inlet end 52 and the outlet end 56, wherein the central passage is bounded by the inner wall surface 60A of the inlet tube; the outlet end 56 including the undercut 200; a deflector 10 mounted in the central passage, the deflector having a plurality of spaced centrally joined helical vanes 11 abutting the inner wall 60A; a coaxially arranged outlet tube 100 positioned within the outlet end 56 of the inlet tube 50, the outlet tube 100 having a first end 101 and an opposite second end 120, the first end having an inlet 101A, the second end 120 having an outlet 120A, and an outlet tube central passage 150 between the inlet 101A and the outlet 120A in fluid communication with the central passage 65 of the inlet tube, the inlet 101A of the outlet tube being of lesser diameter than the central passage 65 of the inlet tube, the outlet tube 100 having an outer surface having a spiral ramp 300 having a first ramp end 301 and a second ramp end 302, the spiral ramp having a portion 310 angled downwardly toward the second ramp end and the undercut; and, a scavenge flow outlet 250 adjacent the undercut and the second ramp end.

Typically, the central passage of the inlet tube has an inner diameter that is constant from the inlet end to the outlet end.

The first end 101 of the outlet tube facing the deflector can define a thin annulus that separates clean core flow in the passage 150 from contaminant-laden peripheral flow. Some excess air can be lost in the scavenge flow to ensure that only clean air reaches the passage. The end can include a lip, e.g., a conically shaped lip, on the end of the outlet member that is within the tubular housing. The lip, if present, can, for example, form a baffle to direct contaminants, e.g., dirt particles, to the periphery of the tubular housing for discharge.

In some aspects, e.g., as illustrated in Figure 1A, the inlet of the inlet tube further comprises a collar 53 that will typically be deformed once the separator is installed in a housing.

The deflector is coaxially mounted in the central passage at the inlet of the inlet tube, for example, by injection molding (e.g., "one shot" molding), at the points where the vanes 11 abut the inner wall of the inlet tube. The deflector 10 has a plurality of spaced centrally joined helical vanes 11 abutting the wall of the central passage, and positioned at an angle to a line of air flow from the inlet to the outlet, so as to create a vortex stream of influent air centrifugally concentrating contaminant particles in the air at the periphery of the passage, and leaving air at the center of the passage relatively free from contaminant particles

The illustrated vanes are helical and are formed to a pitch length. The deflector can have any suitable length, in a typical embodiment, the vanes occupy in the range of from about 2% to about 20% of the length of the inlet tube. In the embodiment illustrated in Figure 1A, the deflector 10 has a cylindrical hub 12 (which is typically hollow) which extends beyond the vanes on the upstream side thereof to form a tip 13 (shown as a blunt tip), and extends on the downstream side to form a tip 14, that can be in the form of, for example, a blunt tip or a conical tip, e.g., formed to a cone angle in the range of from about 30° to about 60°. Other shapes for either of the tips are encompassed by the invention, for example, the upstream tip can have a dome like shape.

The undercut 200 allows one portion 57 of the outlet end 56 of the inlet tube to extend farther downwardly toward the second end of the outlet tube than another portion 58 of the outlet end of the inlet tube (*See,* Figure 1C). In the illustrated aspect (*see,* Figures 1A-1C), the undercut has a generally vertically arranged edge 201 generally corresponding to the vertical axis "A" of the inertial separator (the vertically arranged edge having an upper end 201A closer to the first end of the outlet tube and a lower end 201B closer to the second end of the outlet tube, *see,* Figure 1B), and a generally horizontally arranged edge 202 perpendicular to the vertically arranged edge, wherein the upper surface of the second ramp end is located between the upper and lower ends 201A, 201B of the vertically arranged edge 201, and the second ramp end 302 is generally aligned with the vertically arranged edge. In some other aspects (not shown) the second ramp end 302 is not generally aligned with the vertically arranged edge, e.g., the end 302 angles downwardly with respect to the vertically arranged edge.

The outlet tube 100 is coaxially positioned within the outlet end 56 of the inlet tube, the outlet tube having an inlet 101A at the first end 101 (the first end extending into the outlet end of the first tube), an outlet 120A at an opposite second end 120, and an outlet tube central passage 150 between the first end and the second end for delivery of clean air from the central portion of the central passage of the first tube (i.e., the outlet tube central passage between the inlet and the outlet of the outlet tube is in fluid communication with a central portion of the central passage of the inlet tube). In the illustrated aspect, the outlet tube is generally tapered (e.g., having a frustoconical shape).

In the illustrated aspects, the outlet tube includes a peripheral or circumferential ring 102 attached to the outlet tube near the inlet end. The ring can provide some flow restriction and possibly "bounce" particles toward the scavenge passage.

The outlet tube includes a circumferential spiral ramp 300 attached to/projecting from the outer surface of the outlet tube between the first and second ends of the outlet tube. The spiral ramp has a first ramp end 301 and a second ramp end 302, a top ramp surface 307 (see, Figure 3A) extending from the first ramp end to the second ramp end, and an ramp outer side wall, wherein the first ramp end is above the second ramp end (i.e., the first ramp end is closer to the first end of the outlet tube than the second ramp end, the second ramp end being closer to the second end of the outlet tube than the first ramp end). Preferably, as shown in Figures 1A, and 3A-3B, the spiral ramp is a single pass, e.g., the ends of the spiral ramp do not overlap or only slightly overlap, and with respect to the vertical axis of the separator the second ramp end does not extend, or extends somewhat (e.g., about 15%), past the first ramp end.

Typically, the ramp constitutes a flow restrictor and reduces the diameter of the central passage of the inlet tube at the ramp to provide a scavenge flow path (shown formed in Figures 1A, 4A, 5, and 6 for the removal of contaminant particles, e.g., dirt from the separator) exiting the separator via the scavenge flow outlet adjacent the inlet tube undercut. The ramp can restrict flow through the annular passage to ensure that the pressure in the central passage 65 is higher than at the scavenge flow outlet. The outer side wall/edge 320 of the ramp preferably contacts (and is more preferably sealed to, e.g., by a friction fit) the inner wall surface 60A of the inlet tube (preferably the outer side wall/edge 320 contacts and seals from one end of the ramp to the other end), e.g., for supporting the outlet tube in position within the inlet tube.

In the illustrated aspect, the spiral ramp 300, which can comprise a helicoidal ramp, has a portion angled 310 downwardly toward the second ramp end 302 and the undercut 200, wherein the first ramp end 301 has little or no downward angle at portion 305 *(see,* Figures 1A and 3). For example, the portion 310 angled downwardly toward the second ramp end and the undercut has an angle in the range of about 1° to about 15°. In some aspects, portion 305 and groove 303 have greater thicknesses and provide for improved sealing to the inlet and outlet tubes.

If desired, the entire spiral ramp 300 can be angled downwardly toward the second ramp end 302 and the undercut 200 and/or the second ramp end can have an additional downward angle from the rest of the ramp.

As illustrated, the inlet (first end) of the outlet tube is of lesser diameter than the central passage 65 of the inlet tube. The first end of the outlet tube facing the deflector can define a thin annulus that sharply separates clean core flow in the passage from contaminant-laden peripheral flow. The end can include a lip, e.g., a conically shaped lip, on the end of the outlet tube that is within the inlet tube. The lip, if present, can, for example, form a baffle to direct contaminants, e.g., dirt particles, to the periphery of the inlet tube for discharge.

Using the aspect shown in Figure 5 for reference, an inertial separator device 600 comprises an inertial separator 500 according to an aspect of the invention arranged in a housing 650.

Using the aspect shown in Figure 6 for reference, an inertial separator array comprises 700 at least two inertial (i.e., a plurality of) separators 500 according to an aspect of the invention arranged in a housing 750. An inertial separator array can comprise any number of inertial separators (e.g., tens of inertial separators, hundreds of inertial separators, thousands of inertial separators) according to an aspect of the invention arranged in a housing.

Figure 8A is a drawing showing an inertial separator array 800 according to an aspect of the invention in communication with a fan, Figure 8B is a drawing showing an inertial separator array 800 according to an aspect of the invention in communication with an air ejector, each array comprising a plurality of separators 500, mounted on inlet tube plates 801 and outlet tube plates 802, wherein the inertial separator arrays shown in Figures 8A and 8B can be used with a gas turbine engine, and Figure 8C is a drawing showing an illustrative turbine engine.

As shown in Figures 4B, 4C, 6, 8A and 8B, the scavenge flow from the plurality of separators can be aligned to more efficiently carry the scavenge flow (e.g., including dust) in the same direction at high velocities away from the separators, and the scavenge flow does not pass into the engine inlet.

In some aspects of an inertial separator, the outlet tube includes pairs of separated anti-rotation tabs that prevent rotation of the outlet tube during use.

For example, using the aspects illustrated in Figures 1B, 3, 7A, and 7B for reference, the outlet tubes each include pairs of outwardly extending anti-rotation tabs 180 (comprising first tab 180A and second tab 180B) and 190 (comprising first tab 190A and second tab 190B). The distance between the tabs in one pair is greater than the distance between the tabs in the other pair. Thus, as illustrated in Figure 7B, the tabs in one pair having a lesser distance between them fit between, and can contact, the tabs in another pair on the adjacent inertial separator, preventing further rotation, as the tabs having the lesser distance between them cannot rotate past the tabs having the greater distance between them.

If desired, the components of the inertial separators can be fabricated from any suitable rigid impervious material, including any impervious thermoplastic material, which is compatible with the fluid being processed. Typically, the inlet tube can be fabricated from a polymer, such as an acrylic, polypropylene, polyethylene, polystyrene, or a polycarbonate resin.

If desired, inertial separators according to embodiments of the invention can be monolithic, optionally manufactured via additive manufacturing (sometimes referred to as "additive layer manufacturing" or "3D printing"). They are typically formed by repeated depositions of a metal powder bound together with an activatable binder (e.g., binder jetting, sometimes referred to as "drop on powder"), typically followed by agglomerating the powder, e.g., by sintering. The components can be manufactured together via additive manufacturing in a continuous operation at substantially the same time. Any suitable additive manufacturing equipment can be used, and a variety of production 3D printers are suitable and commercially available.

The use of the terms "a" and "an" and "the" and "at least one" and similar referents in the context of describing the invention (especially in the context of the following claims) are to be construed to cover both the singular and the plural, unless otherwise indicated herein or clearly contradicted by context. The use of the term "at least one" followed by a list of one or more items (for example, "at least one of A and B") is to be construed to mean one item selected from the listed items (A or B) or any combination of two or more of the listed items (A and B), unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

## Claims

1. An inertial separator device (600) comprising an inertial separator arranged in a housing (750), wherein the inertial separator comprises
(a) an inlet tube (50) having an inlet (51) at an inlet end (52), an outlet (55) at an opposite outlet end (56), the outlet end including an undercut (200), a central passage (65) between the inlet end (52) and the outlet end (56); the outlet end (56) including the undercut (200),
wherein the undercut (200) allows one portion (57) of the outlet end (56) of the inlet tube (50) to extend farther downwardly to the second end (102) of the outlet tube (100) than another portion (58) of the outlet end (56) of the inlet tube (50);
(b) a deflector (10) coaxially mounted in the central passage (65), the deflector having a plurality of spaced centrally joined helical vanes (11) abutting the wall (60) of the central passage;
(c) a coaxially arranged outlet tube (100) positioned within the outlet end (56) of the inlet tube (50), the outlet tube (100) having a first end (101) and an opposite second end (102), the first end having an inlet (101A), the second end having an outlet (120A), and an outlet tube central passage (150) between the inlet and the outlet in fluid communication with the central passage (65) of the inlet tube (50),
the inlet (101A) of the outlet tube (100) being of lesser diameter than the central passage (65) of the inlet tube (50), the outlet tube (100) having an outer surface having a spiral ramp (300) having a first ramp end (301) and a second ramp end (302), the spiral ramp having a portion (310) angled downwardly toward the second ramp end (302) and the undercut (200); and,
(d) a scavenge flow outlet (250) adjacent the undercut (200) and the second ramp end (302).

2. An inertial separator array (800) comprising two or more inertial separators arranged in a housing (750), wherein the two or more inertial separators each comprise
(a) an inlet tube (50) having an inlet (51) at an inlet end (52), an outlet (55) at an opposite outlet end (56), the outlet end including an undercut (200), a central passage (65) between the inlet end (52) and the outlet end (56); the outlet end (56) including the undercut (200),
wherein the undercut (200) allows one portion (57) of the outlet end (56) of the inlet tube (50) to extend farther downwardly to the second end (102) of the outlet tube (100) than another portion (58) of the outlet end (56) of the inlet tube (50);
(b) a deflector (10) coaxially mounted in the central passage (65), the deflector having a plurality of spaced centrally joined helical vanes (11) abutting the wall (60) of the central passage;
(c) a coaxially arranged outlet tube (100) positioned within the outlet end (56) of the inlet tube (50), the outlet tube (100) having a first end (101) and an opposite second end (102), the first end having an inlet (101A), the second end having an outlet (120A), and an outlet tube central passage (150) between the inlet and the outlet in fluid communication with the central passage (65) of the inlet tube (50),
the inlet (101A) of the outlet tube (100) being of lesser diameter than the central passage (65) of the inlet tube (50), the outlet tube (100) having an outer surface having a spiral ramp (300) having a first ramp end (301) and a second ramp end (302), the spiral ramp having a portion (310) angled downwardly toward the second ramp end (302) and the undercut (200); and,
(d) a scavenge flow outlet (250) adjacent the undercut (200) and the second ramp end (302).

3. The inertial separator array of claim 2, wherein the two or more inertial separators (500) each comprise an outlet tube (100) including first and second pairs (180A, 180B; 190A, 190B) of first and second anti-rotation tabs (180, 190), wherein first and second anti-rotation tabs of the first pair of anti-rotation tabs are spaced further apart than first and second anti-rotation tabs of the second pair of anti-rotation tabs.

4. The inertial separator device of claim 1, or the inertial separator array of claim 2, wherein the spiral ramp of the inertial separator(s) have/has a portion (305) with little or no downward angle at the first ramp end.

5. A method of processing air flow into an operating engine, the method comprising:
passing air into the inlet of each of the two or more inertial separators of the inertial separator array of any one of claims 2-4; and,
passing scavenge-depleted air from the outlet of the outlet tube of each of the two or more inertial separators into the operating engine, and passing scavenge flow from the two or more inertial separators through the scavenge flow outlet.

6. The method of claim 5, wherein the two or more inertial separators of the inertial separator array each comprise an outlet tube including first and second pairs of first and second anti-rotation tabs, wherein first and second anti-rotation tabs of the first pair of anti-rotation tabs are spaced further apart than first and second anti-rotation tabs of the second pair of anti-rotation tabs, and one pair of first and second anti-rotation tabs of one inertial separator contact one pair of first and second anti-rotation tabs of an adjacent inertial separator, preventing further rotation of the adjacent inertial separators.

7. A method of processing air flow into an operating engine, the method comprising:
passing air into the inlet of the inertial separator of the inertial separator device of claim 1 or 4; and,
passing scavenge-depleted air from the outlet of the outlet tube of the inertial separator into the operating engine, and passing scavenge flow from the inertial separator through the scavenge flow outlet.

## Patentansprüche

1. Trägheitsabscheidervorrichtung (600), die einen in einem Gehäuse (750) angeordneten Trägheitsabscheider umfasst, wobei der Trägheitsabscheider Folgendes umfasst
(a) ein Einlassrohr (50), das einen Einlass (51) an einem Einlassende (52), einen Auslass (55) an einem entgegengesetzten Auslassende (56), wobei das Auslassende eine Hinterschneidung (200) einschließt, einen zentralen Durchgang (65) zwischen dem Einlassende (52) und dem Auslassende (56) aufweist; wobei das Auslassende (56) die Hinterschneidung (200) einschließt,
wobei die Hinterschneidung (200) es ermöglicht, dass sich ein Abschnitt (57) des Auslassendes (56) des Einlassrohrs (50) weiter abwärts zu dem zweiten Ende (102) des Auslassrohrs (100) erstreckt als ein anderer Abschnitt (58) des Auslassendes (56) des Einlassrohrs (50);
(b) ein koaxial in dem zentralen Durchgang (65) montiertes Ablenkelement (10), wobei das Ablenkelement eine Vielzahl von beabstandeten, mittig verbundenen spiralförmigen Lamellen (11) aufweist, die an der Wand (60) des zentralen Durchgangs anstoßen;
(c) ein koaxial angeordnetes Auslassrohr (100), das innerhalb des Auslassendes (56) des Einlassrohrs (50) positioniert ist, wobei das Auslassrohr (100) ein erstes Ende (101) und ein entgegengesetztes zweites Ende (102), wobei das erste Ende einen Einlass (101A) aufweist, wobei das zweite Ende einen Auslass (120A) aufweist, und einen zentralen Durchgang (150) des Auslassrohrs zwischen dem Einlass und dem Auslass in Fluidkommunikation mit dem zentralen Durchgang (65) des Einlassrohrs (50) aufweist,
wobei der Einlass (101A) des Auslassrohrs (100) einen kleineren Durchmesser aufweist als der zentrale Durchgang (65) des Einlassrohrs (50), wobei das Auslassrohr (100) eine Außenfläche aufweist, die eine spiralförmige Rampe (300) aufweist, die ein erstes Rampenende (301) und ein zweites Rampenende (302) aufweist, wobei die spiralförmige Rampe einen Abschnitt (310) aufweist, der abwärts zu dem zweiten Rampenende (302) und der Hinterschneidung (200) hin angewinkelt ist; und,
(d) einen Spülstromauslass (250) benachbart zu der Hinterschneidung (200) und zu dem zweiten Rampenende (302).

2. Trägheitsabscheider-Array (800), das zwei oder mehr in einem Gehäuse (750) angeordnete Trägheitsabscheider umfasst, wobei die zwei oder mehr Trägheitsabscheider jeweils Folgendes umfassen
(a) ein Einlassrohr (50), das einen Einlass (51) an einem Einlassende (52), einen Auslass (55) an einem entgegengesetzten Auslassende (56), wobei das Auslassende eine Hinterschneidung (200) einschließt, einen zentralen Durchgang (65) zwischen dem Einlassende (52) und dem Auslassende (56) aufweist; wobei das Auslassende (56) die Hinterschneidung (200) einschließt, wobei die Hinterschneidung (200) es ermöglicht, dass sich ein Abschnitt (57) des Auslassendes (56) des Einlassrohrs (50) weiter abwärts zu dem zweiten Ende (102) des Auslassrohrs (100) erstreckt als ein anderer Abschnitt (58) des Auslassendes (56) des Einlassrohrs (50);
(b) ein koaxial in dem zentralen Durchgang (65) montiertes Ablenkelement (10), wobei das Ablenkelement eine Vielzahl von beabstandeten, mittig verbundenen spiralförmigen Lamellen (11) aufweist, die an der Wand (60) des zentralen Durchgangs anstoßen;
(c) ein koaxial angeordnetes Auslassrohr (100), das innerhalb des Auslassendes (56) des Einlassrohrs (50) positioniert ist, wobei das Auslassrohr (100) ein erstes Ende (101) und ein entgegengesetztes zweites Ende (102), wobei das erste Ende einen Einlass (101A) aufweist, wobei das zweite Ende einen Auslass (120A) aufweist, und einen zentralen Durchgang (150) des Auslassrohrs zwischen dem Einlass und dem Auslass in Fluidkommunikation mit dem zentralen Durchgang (65) des Einlassrohrs (50) aufweist,
wobei der Einlass (101A) des Auslassrohrs (100) einen kleineren Durchmesser aufweist als der zentrale Durchgang (65) des Einlassrohrs (50), wobei das Auslassrohr (100) eine Außenfläche aufweist, die eine spiralförmige Rampe (300) aufweist, die ein erstes Rampenende (301) und ein zweites Rampenende (302) aufweist, wobei die spiralförmige Rampe einen Abschnitt (310) aufweist, der abwärts zu dem zweiten Rampenende (302) und der Hinterschneidung (200) hin angewinkelt ist; und,
(d) einen Spülstromauslass (250) benachbart zu der Hinterschneidung (200) und zu dem zweiten Rampenende (302).

3. Trägheitsabscheider-Array nach Anspruch 2, wobei die zwei oder mehr Trägheitsabscheider (500) jeweils ein Auslassrohr (100) umfassen, das ein erstes und ein zweites Paar (180A, 180B; 190A, 190B) einer ersten und einer zweiten Verdrehsicherungslasche (180, 190) einschließt, wobei die erste und die zweite Verdrehsicherungslasche des ersten Paars von Verdrehsicherungslaschen weiter voneinander beabstandet sind als die erste und die zweite Verdrehsicherungslasche des zweiten Paars von Verdrehsicherungslaschen.

4. Trägheitsabscheidervorrichtung nach Anspruch 1, oder das Trägheitsabscheider-Array nach Anspruch 2, wobei die spiralförmige Rampe des/der Trägheitsabscheider(s) einen Abschnitt (305) mit wenig oder keinem Abwärtswinkel an dem ersten Rampenende aufweist.

5. Verfahren zum Verarbeiten eines Lufttroms in einen Motor, der in Betrieb ist, das Verfahren umfassend:
Leiten von Luft in den Einlass von jedem der zwei oder mehr Trägheitsabscheider des Trägheitsabscheider-Arrays nach einem der Ansprüche 2-4; und,
Leiten von durch Spülung gereinigter Luft aus dem Auslass des Auslassrohrs von jedem der zwei oder mehr Trägheitsabscheider in den Motor, der in Betrieb ist, und Leiten des Spülstroms aus den zwei oder mehr Trägheitsabscheidern durch den Spülstromauslass.

6. Verfahren nach Anspruch 5, wobei die zwei oder mehr Trägheitsabscheider des Trägheitsabscheider-Arrays jeweils ein Auslassrohr umfassen, das ein erstes und ein zweites Paar einer ersten und einer zweiten Verdrehsicherungslasche einschließt, wobei die erste und die zweite Verdrehsicherungslasche des ersten Paars von Verdrehsicherungslaschen weiter beabstandet sind als die erste und die zweite Verdrehsicherungslasche des zweiten Paars von Verdrehsicherungslaschen und ein Paar einer ersten und einer zweiten Verdrehsicherungslasche eines Trägheitsabscheiders mit einem Paar einer ersten und einer zweiten Verdrehsicherungslasche eines benachbarten Trägheitsabscheiders in Kontakt steht, wodurch eine weitere Drehung der benachbarten Trägheitsabscheider verhindert wird.

7. Verfahren zum Verarbeiten eines Luftstroms in einen Motor, der in Betrieb ist, das Verfahren umfassend:
Leiten von Luft in den Einlass des Trägheitsabscheiders der Trägheitsabscheidervorrichtung nach Anspruch 1 oder 4; und,
Leiten von durch Spülung gereinigter Luft aus dem Auslass des Auslassrohrs des Trägheitsabscheiders in den Motor, der in Betrieb ist, und Leiten eines Spülstroms aus dem Trägheitsabscheider durch den Spülstromauslass.

## Revendications

1. Dispositif séparateur inertiel (600) comprenant un séparateur inertiel agencé dans un boîtier (750), dans lequel le séparateur inertiel comprend
(a) un tube d'entrée (50) présentant une entrée (51) au niveau d'une extrémité d'entrée (52), une sortie (55) au niveau d'une extrémité de sortie (56) opposée, l'extrémité de sortie incluant une contre-dépouille (200), un passage central (65) entre l'extrémité d'entrée (52) et l'extrémité de sortie (56) ; l'extrémité de sortie (56) incluant la contre-dépouille (200),
dans lequel la contre-dépouille (200) permet à une portion (57) de l'extrémité de sortie (56) du tube d'entrée (50) de s'étendre davantage vers le bas jusqu'à la deuxième extrémité (102) du tube de sortie (100) qu'une autre portion (58) de l'extrémité de sortie (56) du tube d'entrée (50) ;
(b) un déflecteur (10) monté coaxialement dans le passage central (65), le déflecteur présentant une pluralité d'aubes (11) hélicoïdales espacées et jointes au centre venant en butée contre la paroi (60) du passage central ;
(c) un tube de sortie (100) agencé coaxialement positionné à l'intérieur de l'extrémité de sortie (56) du tube d'entrée (50), le tube de sortie (100) présentant une première extrémité (101) et une deuxième extrémité (102) opposée, la première extrémité présentant une entrée (101A), la deuxième extrémité présentant une sortie (120A), et un passage central (150) de tube de sortie entre l'entrée et la sortie en communication fluidique avec le passage central (65) du tube d'entrée (50),
l'entrée (101A) du tube de sortie (100) présentant un diamètre inférieur au passage central (65) du tube d'entrée (50), le tube de sortie (100) présentant une surface externe présentant une rampe en spirale (300) présentant une première extrémité de rampe (301) et une deuxième extrémité de rampe (302), la rampe en spirale présentant une portion (310) inclinée vers le bas vers la deuxième extrémité de rampe (302) et la contre-dépouille (200) ; et,
(d) une sortie (250) de flux de balayage adjacente à la contre-dépouille (200) et à la deuxième extrémité (302) de rampe.

2. Réseau de séparateurs inertiels (800) comprenant deux ou plus de deux séparateurs inertiels agencés dans un boîtier (750), dans lequel les deux ou plus de deux séparateurs inertiels comprennent chacun
(a) un tube d'entrée (50) présentant une entrée (51) au niveau d'une extrémité d'entrée (52), une sortie (55) au niveau d'une extrémité de sortie (56) opposée, l'extrémité de sortie incluant une contre-dépouille (200), un passage central (65) entre l'extrémité d'entrée (52) et l'extrémité de sortie (56) ; l'extrémité de sortie (56) incluant la contre-dépouille (200),
dans lequel la contre-dépouille (200) permet à une portion(57) de l'extrémité de sortie (56) du tube d'entrée (50) de s'étendre davantage vers le bas jusqu'à la deuxième extrémité (102) du tube de sortie (100) qu'une autre portion (58) de l'extrémité de sortie (56) du tube d'entrée (50) ;
(b) un déflecteur (10) monté coaxialement dans le passage central (65), le déflecteur présentant une pluralité d'aubes (11) hélicoïdales espacées et jointes au centre venant en butée contre la paroi (60) du passage central ;
(c) un tube de sortie (100) agencé coaxialement positionné à l'intérieur de l'extrémité de sortie (56) du tube d'entrée (50), le tube de sortie (100) présentant une première extrémité (101) et une deuxième extrémité (102) opposée, la première extrémité présentant une entrée (101A), la deuxième extrémité présentant une sortie (120A), et un passage central (150) de tube de sortie entre l'entrée et la sortie en communication fluidique avec le passage central (65) du tube d'entrée (50),
l'entrée (101A) du tube de sortie (100) présentant un diamètre inférieur au passage central (65) du tube d'entrée (50), le tube de sortie (100) présentant une surface externe présentant une rampe en spirale (300) présentant une première extrémité de rampe (301) et une deuxième extrémité de rampe (302), la rampe en spirale présentant une portion (310) inclinée vers le bas vers la deuxième extrémité de rampe (302) et la contre-dépouille (200) ; et,
(d) une sortie (250) de flux de balayage adjacente à la contre-dépouille (200) et à la deuxième extrémité (302) de rampe.

3. Réseau de séparateurs inertiels selon la revendication 2, dans lequel les deux ou plus de deux séparateurs inertiels (500) comprennent chacun un tube de sortie (100) incluant des première et deuxième paires (180A, 180B ; 190A, 190B) de premières et de deuxièmes languettes anti-rotation (180, 190), dans lequel les première et deuxième languettes anti-rotation de la première paire de languettes anti-rotation sont plus espacées que les première et deuxième languettes anti-rotation de la deuxième paire de languettes anti-rotation.

4. Dispositif séparateur inertiel selon la revendication 1, ou réseau de séparateurs inertiels selon la revendication 2, dans lequel la rampe en spirale du ou des séparateurs inertiels présente une portion (305) avec peu ou pas d'angle descendant au niveau de la première extrémité de rampe.

5. Procédé de traitement de flux d'air dans un moteur en marche, le procédé comprenant :
le passage d'air dans l'entrée de chacun des deux ou plus de deux séparateurs inertiels du réseau de séparateurs inertiels selon l'une quelconque des revendications 2 à 4 ; et,
le passage d'air épuisé par balayage depuis la sortie du tube de sortie de chacun des deux ou plus de deux séparateurs inertiels dans le moteur en marche, et le passage du flux de balayage depuis les deux ou plus de deux séparateurs inertiels à travers la sortie de flux de balayage.

6. Procédé selon la revendication 5, dans lequel les deux ou plus de deux séparateurs inertiels du réseau de séparateurs inertiels comprennent chacun un tube de sortie incluant des première et deuxième paires de premières et deuxièmes languettes anti-rotation, dans lequel les première et deuxième languettes anti-rotation de la première paire de languettes anti-rotation sont espacées davantage des première et deuxième languettes anti-rotation de la deuxième paire de languettes anti-rotation, et une paire de première et deuxième languettes anti-rotation d'un séparateur inertiel entre en contact avec une paire de première et deuxième languettes anti-rotation d'un séparateur inertiel adjacent, empêchant une rotation supplémentaire des séparateurs inertiels adjacents.

7. Procédé de traitement de flux d'air dans un moteur en marche, le procédé comprenant :
le passage d'air dans l'entrée du séparateur inertiel du dispositif séparateur inertiel selon la revendication 1 ou 4 ; et,
le passage d'air épuisé par balayage depuis la sortie du tube de sortie du séparateur inertiel dans le moteur en marche, et le passage d'un flux de balayage depuis le séparateur inertiel à travers la sortie de flux de balayage.
